# EUROPEAN PATENT APPLICATION

(11) **EP 1 864 786 A1**
(43) Date of publication of application: **12.12.2007**
(21) Application number: 06730394.1
(22) Date of filing: 29.03.2006
(51) Int. Cl.: B29C 73/10, B60C 5/14, C09J 123/28

(54) **METHOD OF REPAIRING INSIDE SURFACE PORTION OF PNEUMATIC TIRE, AND RELEVANT INSIDE SURFACE PORTION REPAIR MATERIAL**

(30) Priority: 30.03.2005 JP 2005096961; 08.04.2005 JP 2005111611
(71) Applicant: Bridgestone Corporation, Tokyo 104-8340 (JP)
(72) Inventor: MASUYA, Ryo, BRIDGESTONE CORPORATION, Tech. Center, Tokyo, 187-8531 (JP); FUJIWARA, Hiroyuki, BRIDGESTONE CORPORATION, Tokyo 187-8531 (JP)
(74) Representative: Whalley, Kevin
(86) International application number: PCT/JP2006/306446
(87) International publication number: WO 2006/106722

(57) **Abstract**

The invention relates to (I) a method for repairing an inner face portion of a pneumatic tire 11, **characterized in that** a repairing site J in the inner face portion of the pneumatic tire 11 having an innerliner in its inner face portion is repaired by (IA) attaching a thin-film repair member 22 made from a resin having a high air impermeability to the repairing site J with an adhesive 24 or (IB) attaching a thin-film repair member 22 made from a thermoplastic resin having a high air impermeability through solvent welding as well as (II) a repair member 26 for an inner face portion of a pneumatic tire 11, **characterized in that** the repair member is constructed by bond-laminating a rubber layer 27 made of a vulcanized rubber with a resin layer 28 made from a resin having a high air impermeability and attached to a repairing site J in the inner face portion of the pneumatic tire 11 to repair the repairing site J.

## Description

### TECHNICAL FIELD

This invention relates to a method for repairing an inner face portion of a pneumatic tire and a repair member used for repairing the inner face portion of the pneumatic tire.

### RELATED ART

In general, when a tread portion and a sidewall portion of a pneumatic tire are subjected to a perforating injury through a nail, a bolt or the like left on a road during the running of the pneumatic tire, an internal tire pressure is dropped to make the running impossible, so that the repairing is carried out by attaching a repair member to a given region of the inner face of the tire centering on the perforating injury or a repairing site and adhering by vulcanization thereto.

Heretofore, there have been known a repairing method for the inner face portion of the pneumatic tire and a repair member for the inner face portion as disclosed, for example, in JP-A-H08-244124. In the repairing method for the inner face portion disclosed in JP-A-H08-244124, when the tread portion or the sidewall portion of the pneumatic tire is subjected to a perforating injury through a nail, a bolt or the like left on a road during the running of the pneumatic tire, a plugging rubber is filled in the perforating injury and thereafter a repair patch made from reinforcing cords and a uncured rubber is attached to a repairing site around the perforating injury and then vulcanized at a high temperature to fix the repair patch to the repairing region.

Also, the repair member for the inner face portion disclosed in JP-A-H08-244124 is constructed with a first rubber layer disposed to a side of an attaching face opposing to the repairing site and made of NR (natural rubber)-based rubber having a good adhesiveness to the inner face portion (innerliner) of the pneumatic tire, a second rubber layer disposed at a side of face opposite to the attaching face remote from the repairing site and made of a butyl-based rubber having a high impermeability to air, and a layer sandwiched between the first and second rubber layers and containing a plurality of reinforcing cords arranged in parallel to each other.

### DISCLOSURE OF THE INVENTION

However, in the conventional repairing method for the inner face portion of the pneumatic tire as mentioned above, since the repair patch is made from the reinforcing cords and the uncured rubber, it is necessary to vulcanize the repair patch for strongly fixing the repair patch to the repairing site, and as a result, there is a problem that it is required to take a complicated operation over a long time and a big installation.

It is, therefore, a first object of the invention to a method for repairing an inner face portion of a pneumatic tire which can repair the inner face portion of the pneumatic tire simply and rapidly.

In the conventional repair member for the inner face portion of the pneumatic tire as mentioned above, since each of the first and second layers other than the reinforcing cord layer is made of rubber, such a repair member has a certain weight, and hence when this repair member is attached to the repairing site of the pneumatic tire, the balance between static and dynamic states of the pneumatic tire is disrupted to deteriorate the ride comfort against vibrations during the running.

It is, therefore, a second object of the invention to provide a repair member for the inner face portion of the pneumatic tire being light in the weight and hardly disrupting the balance between static and dynamic states even after being attached to the repairing site.

The first object can be attained firstly by a method for repairing an inner face portion of a pneumatic tire wherein a thin-film repair member made from a resin having a high air impermeability is attached to a repairing side in the inner face portion of the pneumatic tire having an innerliner with an adhesive to repair the repairing site,
or secondly by a method for repairing an inner face portion of a pneumatic tire wherein a thin-film repair member made from a thermoplastic resin having a high air impermeability is attached to a repairing site in the inner face portion of the pneumatic tire having an innerliner through solvent welding to repair the repairing site.

Also, the second object can be attained by constructing a repair member with a bonded laminate of a rubber layer made of vulcanized rubber and a resin layer made of a resin having a high air impermeability and attaching to a repairing site of an inner face portion of a pneumatic tire to repair the repairing site.

In the invention of claim 1, the repairing site in the inner face portion of the pneumatic tire can be repaired only by attaching the thin-film repair member to the repairing site with the adhesive, so that the inner face portion of the pneumatic tire can be repaired simply and rapidly. In the invention of claim 2, the repairing site in the inner face portion of the tire can be repaired only by attaching the thin-film repair member made from the thermoplastic resin to the repairing site through solvent welding, so that the inner face portion of the pneumatic tire can be repaired simply and rapidly in a small-scale installation. And, in the inventions of claim 1 and 2, the thin-film repair member is made from a resin having a high air impermeability, so that the function of supporting the internal pressure in the repairing site after the repairing can be made strong.

According to the construction as described in claim 3, the attaching force of the thin-film repair member to the repairing site can be made strong.

According to the construction as described in claim 4, the adhesive hardly runs over the thin-film repair member, so that the appearance after the repairing becomes good, and also when the thin-film repair member is solvent-welded, the adhesive can be used as a temporary joint.

According to the construction as described in claim 5, the thin-film repair member is the same material as in the repairing site, so that the solvent-welding strength is improved and also the air impermeability can be made substantially the same over a full region of the inner face portion of the pneumatic tire.

According to the construction as described in claim 6, the thin-film repair member can be surely solvent-welded to the repairing site while substantially maintaining the initial form of the thin-film repair member.

According to the construction as described in claim 7, the solvent welding of the thin-film repair member can be carried out along the way of vulcanization, so that the equipment and operation for the solvent welding are useless.

According to the construction as described in claim 8, the peeling resistance is excellent and also the workability is good.

According to the construction as described in claim 9, the thin-film repair member is well fitted to the repairing site by deformation and the adhesiveness to the repairing site is improved.

According to the construction as described in claim 10, the adhesiveness of the thin-film repair member to the repairing site is further improved.

In the invention of claim 11, the repair member for the inner face portion is constructed by bond-laminating the rubber layer made of vulcanized rubber with the resin layer made from a resin having a high air impermeability, so that a part of the repair member for the inner face portion is constituted with the resin having a specific gravity smaller than that of rubber. As a result, the weight of the repair member for the inner face portion is reduced, whereby the deterioration of the ride comfort against vibrations during the running of the pneumatic tire can be effectively suppressed without largely disrupting the balance between static and dynamic states even if it is attached to the repairing site.

According to the construction as described in claim 12, if the carcass cord or belt cord in the pneumatic tire is injured, such an injured portion can be reinforced by the reinforcing cords.

According to the construction as described in claim 13, the attaching face of the repair member for the inner face portion is the same material as in the repairing site, so that the attaching strength is improved and also the air impermeability can be made substantially the same over the full region of the inner face portion of the pneumatic tire.

According to the construction as described in claim 14, the attaching strength can be improved.

According to the construction as described in claim 15, the air impermeability can be made equal to or more than that of the conventional repair member for the inner face portion.

According to the construction as described in claim 16, the adhesive hardly runs over the repair member for the inner face portion, so that the appearance after the repairing becomes good.

According to the construction as described in claim 17, the adhesion force can be improved and also the workability can be made good.

According to the construction as described in claim 18, the adhesion force of the repair member for the inner face portion to the repairing site becomes stronger.

### BRIEF DESCRIPTION OF THE DRAWINGS

FIG. 1 is a meridional section view of a pneumatic tire illustrating Embodiment 1 of the invention.
FIG. 2 is an enlarged section view of a part A in FIG. 1.
FIG. 3 is a plan view of a thin-film repair member.
FIG. 4 is an enlarged section view of a part B in FIG. 1.
FIG. 5 is a meridional section view of a pneumatic tire illustrating Embodiment 2 of the invention.
FIG. 6 is an enlarged section view of a part C in FIG. 5.
FIG. 7 is a plan view of a repair member for an inner face portion.
FIG. 8 is a section view of a repair member for an inner face portion illustrating Embodiment 3 of the invention.
FIG. 9 is a section view of a repair member for an inner face portion illustrating Embodiment 4 of the invention.
FIG. 10 is a section view of a repair member for an inner face portion illustrating Embodiment 5 of the invention.

### BEST MODE FOR CARRYING OPT THE INVENTION

### <Embodiment 1>

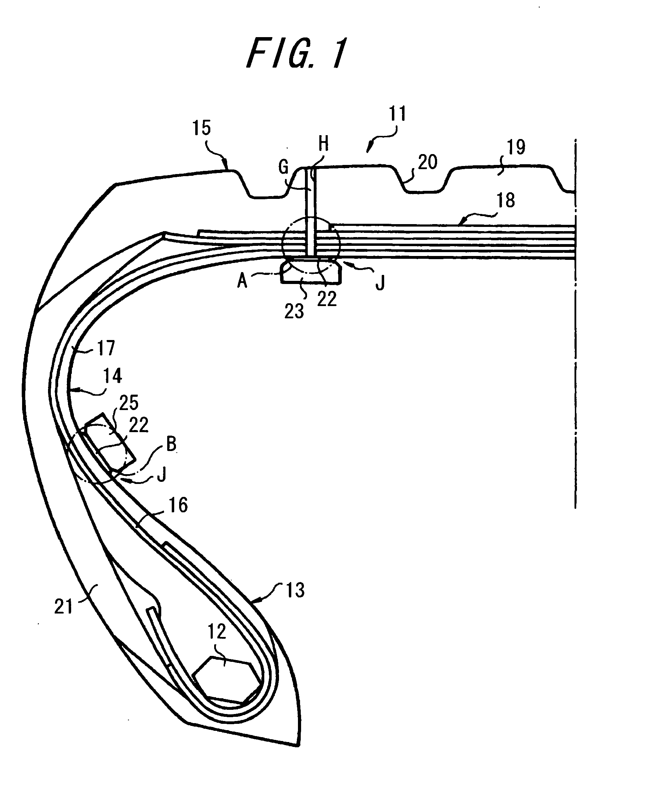

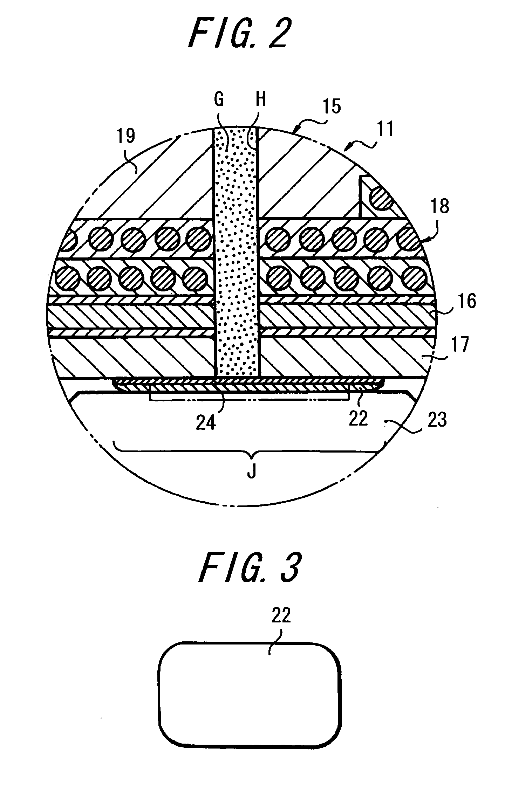

Embodiment 1 of the invention will be described with reference to the drawings below. In FIGS. 1 and 2, numeral 11 is a pneumatic tire mounted onto a passenger car, a truck, a bus or the like. The pneumatic tire 11 comprises a pair of bead portions 13 each embedded with a bead core 12, a sidewall portion 14 extending substantially outward from each of the bead portion 13 in a radial direction, and a tread portion 15 of substantially a cylindrical form connecting radially outer ends of both the sidewall portions to each other.

Further, the pneumatic tire 11 comprises a carcass layer 16 toroidally extending between the bead cores 12 and reinforcing the sidewall portion 14 and the tread portion 15, in which both end portions of the carcass layer 16 are turned up around the bead cores 12 from an axially inside toward an axially outside. Also, in an inner face portion of the pneumatic tire 11, concretely an inner face side of the carcass layer 16 is arranged an innerliner 17 made from rubber such as butyl rubber or a thermoplastic resin having a high air impermeability in at least an inner face side (exposed face side) thereof for strongly suppressing the drop of an internal tire pressure. At this moment, the high air permeability means that an air permeation constant is not more than 1.5x10⁻⁹ cm³ · cm/cm² · sec· kPa.

As the thermoplastic resin may be mentioned, for example, resins such as polyester base, nylon base, polynitrile base, polyvinyl base, polyolefin base, urethane base, ethylene-vinylalcohol copolymer base and the like. These resins may be used alone or in a combination of two or more, and further there may be used a copolymer of monomers constituting these resins.

Concretely, the polyester base includes polyethylene terephthalate, polyethylene naphthalate and polybutylene terephthalate, and the nylon base includes 6-nylon and 6,6-nylon, and the polyvinyl base includes polyvinyl chloride and polyvinylidene chloride, and the polyolefin base includes polyethylene and polypropylene, and the ethylene-vinylalcohol copolymer base includes ethylene-vinylalcohol copolymer modified with an epoxy compound and the like.

Numeral 18 is a belt layer disposed outside the carcass layer 16 in the radial direction. A top tread 19 is disposed outside the belt layer 18 in the radial direction, and plural main grooves 20 extending in a circumferential direction and lateral grooves not shown crossing with the main groove 20 are formed on an outer surface of the top tread 19. Moreover, numeral 21 is a side tread disposed outside of the carcass layer 16 in an axial direction.

When the pneumatic tire 11 rides on a nail or the like during the running on a road surface to cause an external injury passing through the tread portion 15, the running of the pneumatic tire 11 is made impossible due to the drop of the internal pressure, so that the puncture repairing should be conducted. In this case, the perforating injury H is first subjected to a given pretreatment such as buffing, application of an adhesive or the like, and thereafter a plugging rubber G is filled therein and then a portion of the plugging rubber G protruding from the outer and inner surfaces of the tread portion 15 is removed to make the inner and outer surfaces of the tread portion 15 smooth.

Thereafter, a thin-film repair member 22 made from a thermoplastic resin is pushed onto a given area of the inner face of the tread portion 15 (innerliner 17) centering on the perforating injury H or a repairing site J while heating by a solvent-welding member 23 such as a press jig, an iron or the like having a surface temperature of not lower than 50°C and attached thereto through solvent welding to repair the repairing site J. Thus, the repairing site J can be repaired only by attaching the thin-film repair member 22 to the repairing site J through solvent welding, so that the inner face portion of the pneumatic tire 11 can be repaired simply and rapidly by a small-scale equipment (solvent-welding member 23) for merely pushing the repair member under heating. In this case, since the thin-film repair member 22 is constituted with the resin having a high air impermeability, the function of holding the internal pressure at the repairing site J after the repairing can be made strong.

As the thermoplastic resin constituting the thin-film repair member and having a high air impermeability may be used the thermoplastic resin used in the innerliner 17. When such a thermoplastic resin is used in the thin-film repair member 22, if at least an inner surface side of the innerliner 17 (exposed surface side) is constructed with the above-mentioned thermoplastic resin, the thin-film repair member 22 is the same material as in the repairing site J (innerliner 17), so that the solvent welding strength is improved and also the air impermeability can be made substantially the same over a full region of the inner face of the pneumatic tire 11.

When the thin-film repair member 22 is attached to the repairing site J through solvent welding, it is heated to a temperature ranging from a melting point of the thermoplastic resin constituting the thin-film repair member 22 to a temperature of the melting point plus 20°C. When the heating temperature is lower than the melting point, the thin-film repair member 22 is not softened sufficiently and may not be surely solvent-welded to the repairing site J, while when it exceeds a temperature of the melting point plus 20°C, the thin-film repair member 22 is excessively softened and easily fluidized and far removed from its initial form and hence the repairing may become failure. However, when it is within the above range, the repair member is fluidly deformed from the initial form shown by a phantom line in FIG. 2 to an attaching form shown by a solid line while substantially maintaining the initial form and can be surely solvent-welded to the repairing site J.

The form of the thin-film repair member 22 may be optimally selected from various shapes such as rectangle, ellipsoid, oval, circle and the like in accordance with position, size and the like of the repairing site J. For example, FIG. 3 shows substantially a rectangular form. Also, the thin-film repair member 22 is preferable to have a thickness t of 0.4-20 mm. When the thickness t is less than 0.4 mm, the sufficient repairing strength may be not obtained, while when it exceeds 20 mm, the repairing strength is saturated and the weight increases.

It is preferable that prior to the attachment of the above thin-film repair member 22, the cleaning of the repairing site J is conducted, for example, by wiping the surface of the repairing site J with a waste cloth or with a solvent. When the repairing site J is cleaned to expose a clean surface, the attaching force of the thin-film repair member 22 to the repairing site J can be increased powerfully.

Also, prior to the attachment of the thin-film repair member through solvent welding, when an adhesive 24 is attached to a side of thin-film repair member 22 to be attached, the thin-film repair member 22 can be temporarily attached to the repairing site J through the adhesive 24 before the solvent welding, and hence the attaching position of the thin-film repair member 22 to the repairing site J can be corrected easily. Moreover, if the repairing site J is positioned on the downside by rotating the pneumatic tire 11, the thin-film repair member 22 may be simply placed on the repairing site J and solvent-welded through the solvent-welding member 23, so that the attachment of the adhesive 24 may be omitted.

The adhesive 24 may be adhered to the thin-film repair member by applying to an attaching side or attaching an adhesive film, or the adhesive may be adhered to the side of the repairing site J. As the adhesive 24 may be used Chemlok 234B (made by Lord Far-East) or an adhesive having a composition mentioned later.

Moreover, when the pneumatic tire 11 to be repaired is a retread tire (base tire), the thin-film repair member 22 may be attached to the repairing site J through solvent welding in the retreading operation of the retread tire or by heat generated by vulcanizing an uncured tread with a vulcanization apparatus. In this case, the solvent welding of the thin-film repair member 22 can be conducted along the way of vulcanization, so that the equipment and operation for the solvent welding are unnecessary.

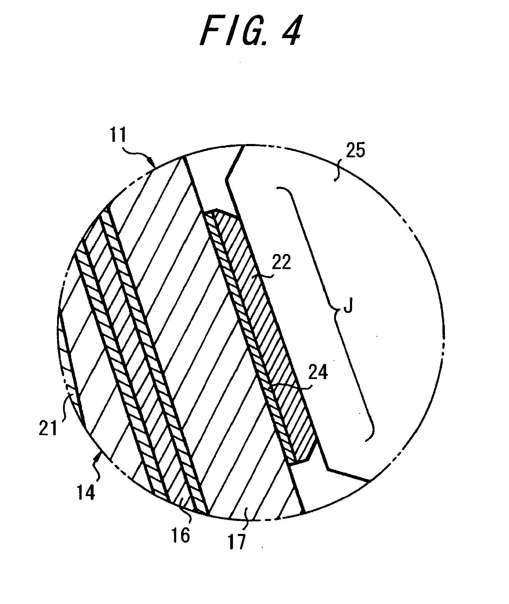

Also, the repairing of the repairing site J with the thin-film repair member can be carried out by attaching the thin-film repair member 22 with the adhesive 24 likewise the above case as shown in FIGS. 1 and 4. In this case, the repairing of the repairing site J can be repaired by simply attaching the thin-film repair member 22 to the repairing site J with the adhesive 24, so that the inner face portion of the pneumatic tire 11 can be repaired simply and rapidly and also the function of holding the internal pressure in the repairing site J after the repairing can be enhanced. Moreover, it is preferable that the repairing site H is cleaned prior to the attachment likewise the above case.

In the latter case, the adhesive 24 is adhered to the attaching surface of the thin-film repair member 22 prior to the attachment likewise the above case and then the thin-film repair member 22 is attached to the repairing site J.
When the adhesion of the adhesive 24 to the attaching surface of the thin-film repair member 22 is carried out by attaching the film of the adhesive 24 or applying the adhesive 24 prior to the attachment, the adhesive 24 hardly runs off from the thin-film repair member 22, so that the appearance after the repairing becomes good.

When the attachment is conducted only by the adhesive 24, it is preferable that the thin-film repair member 22 is attached to the repairing site J and thereafter the thin-film repair member is pushed onto the pneumatic tire 11 through a press member 25. In this way, the thin-film repair member 22 is deformed to fit into the repairing site J, and hence the adhesion force to the repairing site J can be improved.

As the adhesive 24, it is preferable to use an adhesive comprising a rubber component containing not less than 50% by mass of a halogenated butyl rubber and 2-50 parts by mass of a filler, not less than 0.1 part by mass of thiuram based and/or a substituted dithiocarbamate based vulcanization accelerator and not less than 0.1 part by mass of at least one of poly-p-dinitrosobenzene and 1,4-phenylene dimaleimide as a crosslinking agent and a crosslinking assistant based on 100 parts by mass of the rubber component. When the adhesive having such a composition is used as the adhesive 24, the peeling resistance is excellent and the workability can be made good.

When the adhesive contains not less than 70% by mass of the halogenated butyl rubber and not less than 5% by mass of natural rubber and/or isoprene rubber as the rubber component, the adhesiveness is largely improved, while when not less than 10% by mass of chlorosulfonated polyethylene is included as the rubber component, the weather resistance, ozone resistance and heat resistance are improved.

It is preferable that in the adhesive is included not less than 5 parts by mass of an inorganic filler and/or carbon black as a filler based on 100 parts by mass of the rubber component for improving the peeling resistance. As the inorganic filler may be mentioned at least one selected from silica obtained by a wet method, aluminum hydroxide, aluminum oxide and magnesium oxide. As the substituted dithiocarbamate based vulcanization accelerator included in the adhesive, it is preferable to use zinc dibenzyl dithiocarbamate for improving the peeling resistance.

When the thin-film repair member 22 is attached to the repairing site J with the press member 25, the thin-film repair member 22 and the adhesive 24 may be heated by the press member 25 to a temperature of thermally crosslinking the adhesive 24. In this case, the adhesiveness of the thin-film repair member 22 to the repairing site J is further improved by the thermal crosslinking of the adhesive 24. Such a heating may be carried out by heat generated in the vulcanization. In addition to the above puncture repairing, when an inner face portion (innerliner 17) of a new pneumatic tire 11 has a defective appearance, the repairing can be also conducted by the attachment of the thin-film repair member to the repairing site J through solvent welding or with the adhesive as mentioned above.

In the above-mentioned Embodiment 1, the repairing is conducted on the pneumatic tire 11 wherein at least inner face side of the innerliner 17 is made from the thermoplastic resin, but the invention may be applied to a case of repairing a pneumatic tire wherein the whole of the innerliner is made from rubber having a high air impermeability such as butyl rubber. Although the adhesive 24 is adhered to the attaching face of the thin-film repair member prior to the attachment in Embodiment 1, a sheet-shaped adhesive may be interposed between the thin-film repair member 22 and the repairing site J in the attachment.

### <Embodiment 2>

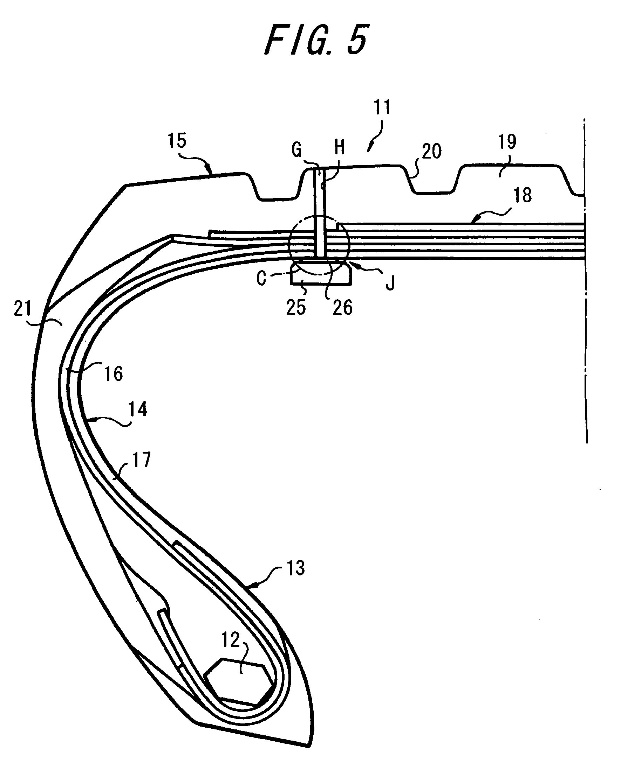

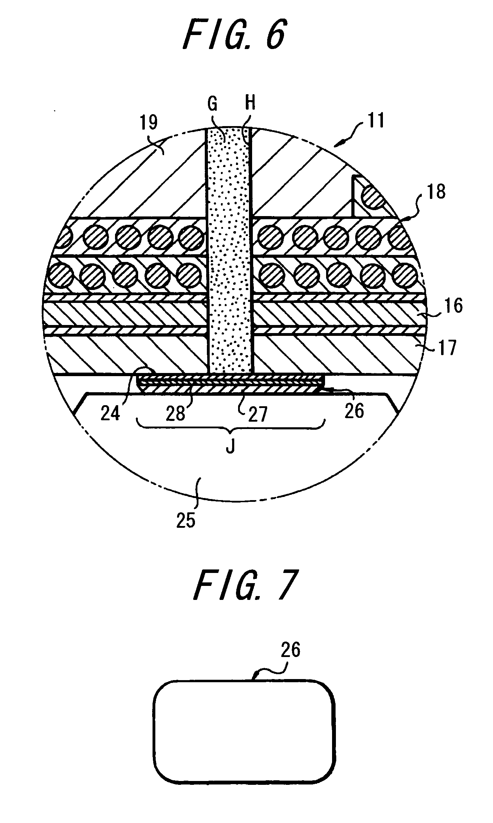

Next, Embodiment 2 of the invention will be described with reference to the drawings. In FIGS. 5 and 6, numeral 11 is a pneumatic tire mounted onto a passenger car, a truck, a bus or the like. The pneumatic tire 11 comprises a pair of bead portions 13 each embedded with a bead core 12, a sidewall portion 14 extending substantially outward from the bead portion 13 in the radial direction, and a tread portion 15 of substantially a cylindrical form connecting radially outer ends of both the sidewall portions to each other.

Also, the pneumatic tire 11 comprises a carcass layer 16 toroidally extending between the bead cores 12 to reinforce the sidewall portions 14 and the tread portion 15, in which both end portions of the carcass layer 16 are wound around the bead cores 12 from axially inside toward axially outside.
Furthermore, in the inner face portion of the pneumatic tire 11, concretely inner face side of the carcass layer 16 is disposed an innerliner 17 wherein at least inner surface side (exposed surface side) is made from rubber having a high air impermeability such as butyl rubber, or a thermoplastic resin having a high air impermeability for strongly suppressing the drop of the internal tire pressure.

As the thermoplastic resin may be mentioned, for example, resins such as polyester base, nylon base, polynitrile base, polyvinyl base, polyolefin base, urethane base, ethylene-vinylalcohol copolymer base and the like. These resins may be used alone or in a combination of two or more, and further there may be used a copolymer of monomers constituting these resins.

Concretely, the polyester base includes polyethylene terephthalate, polyethylene naphthalate and polybutylene terephthalate, and the nylon base includes 6-nylon and 6,6-nylon, and the polyvinyl base includes polyvinyl chloride and polyvinylidene chloride, and the polyolefin base includes polyethylene and polypropylene, and the ethylene-vinylalcohol copolymer base includes ethylene-vinylalcohol copolymer modified with an epoxy compound and the like.

Numeral 18 is a belt layer disposed outside the carcass layer 16 in the radial direction. A top tread 19 is disposed outside the belt layer 18 in the radial direction, and plural main grooves 20 extending in a circumferential direction and lateral grooves not shown crossing with the main groove 20 are formed on an outer surface of the top tread 19. Moreover, numeral 21 is a side tread disposed outside of the carcass layer 16 in an axial direction.

When the pneumatic tire 11 rides on a nail or the like during the running on a road surface to cause an external injury passing through the tread portion 15, the running of the pneumatic tire 11 is made impossible due to the drop of the internal pressure, so that the puncture repairing should be conducted. In this case, the perforating injury H is first subjected to a given pretreatment such as buffing, application of an adhesive or the like, and thereafter a plugging rubber G is filled therein and then a portion of the plugging rubber G protruding from the outer and inner surfaces of the tread portion 15 is removed to make the inner and outer surfaces of the tread portion 15 smooth.

Thereafter, a repair member 26 for the inner face portion is attached to a given area of the inner face portion of the pneumatic tire 11 (innerliner 17) centering on the perforating injury H or a repairing site J with an adhesive 24 to repair the repairing site J. At this moment, the repair member 26 for the inner face portion is constructed by bond-laminating a rubber layer 27 made of a vulcanized rubber protecting at least a resin layer 28 mentioned later and having a good adhesiveness to the resin layer 28 with a resin layer 28 made of a resin having a high air impermeability, and in the illustrated embodiment by bond-laminating a single rubber layer 27 and a single resin layer 28 with, for example, an adhesive having the same composition as the adhesive 24.

Thus, the repair member 26 for the inner face portion is constructed by bond-laminating the rubber layer 27 and the resin layer 28, so that a part of the repair member 26 for the inner face portion is constituted with the resin having a specific gravity smaller than that of rubber, and hence the weight of the repair member 26 for the inner face portion is reduced, whereby the situation of deteriorating the ride comfort against vibrations during the running can be effectively suppressed without largely disrupting the balance between static and dynamic states of the pneumatic tire 11 even if the repair member is attached to the repairing site H. Furthermore, the rubber layer 27 is made of the vulcanized rubber and the repair member 26 for the inner face portion is attached by using the adhesive 24, so that the repairing can be conducted simply and rapidly as compared with the case of conducting the repairing by vulcanization-bonding the repair member for the inner face portion containing an uncured rubber.

As the rubber layer 27 are used a butyl-based rubber such as butyl rubber, halogenated butyl rubber or the like, and natural rubber which are good in the adhesiveness to the resin layer 28 and excellent in the heat resistance. As the thermoplastic resin constituting the resin layer 28 and having a high air impermeability can be used the same thermoplastic resin as used in the innerliner 17. And, a resin layer having an air permeation constant at 20°C of not more than 1.5x10⁻⁹ cm³· cm/cm² · sec· kPa is used as the resin layer 28, and hence the air impermeability can be made equal to or more than that of the conventional repair member for the inner face portion and also the function of holding the internal pressure at the repairing site J after the repairing can be increased powerfully.

When at least inner face side (exposed face side) of the pneumatic tire 11 (innerliner 17) is constructed with the thermoplastic resin as mentioned above, if the repairing is carried out by attaching the repair member 26 for the inner face portion constructed with the resin layer 28 located at the attaching face side to the repairing site J and made of the thermoplastic resin and the rubber layer 27 located at a side opposing to the attaching face (side remote from the repairing site) as in this embodiment to the repairing site J, the resin layer 28 located at the attaching face side is the same material as in the repairing site J (innerliner 17), so that the attaching strength is improved but also the air impermeability can be made substantially the same over the full region of the inner face of the pneumatic tire 11.

Also, the form of the repair member 26 for the inner face portion may be optimally selected from various shapes such as rectangle, ellipsoid, oval, circle and the like in accordance with position, size and the like of the repairing site J. For example, FIG. 7 shows substantially a rectangular form. At this moment, it is preferable that prior to the attachment of the above repair member 26 for the inner face portion, the cleaning of the repairing site J is conducted, for example, by wiping the surface of the repairing site J with a waste cloth or with a solvent. When the repairing site J is cleaned to expose a clean surface, the attaching force of the repair member 26 for the inner face portion to the repairing site J can be increased powerfully.

In this case, the adhesive 24 is adhered to the attaching face side of the repair member 26 for the inner face portion by applying it or attaching an adhesive film and thereafter the repair member 26 for the inner face portion is attached to the repairing site J, so that the adhesive 24 hardly runs off from the repair member 26 for the inner face portion, and hence the appearance after the repairing becomes good.

When the repair member 26 for the inner face portion is attached to the repairing site J with only the adhesive 24, it is preferable that the repair member 26 for the inner face portion is pushed onto the pneumatic tire 11 through the press member 26 at the same time that or after the repair member 26 for the inner face portion is attached to the repairing site J. Thus, the repair member 26 for the inner face portion is deformed to fit into the repairing site J, so that the adhesion force to the repairing site J can be improved. In this case, the resin layer 28 is protected from the press member 25 through the rubber layer 27 to prevent the breakage of the resin layer 28.

As the adhesive 24, it is preferable to use an adhesive comprising a rubber component containing not less than 50% by mass of a halogenated butyl rubber and 2-50 parts by mass of a filler, not less than 0.1 part by mass of thiuram based and/or a substituted dithiocarbamate based vulcanization accelerator and not less than 0.1 part by mass of at least one of poly-p-dinitrosobenzene and 1,4-phenylene dimaleimide as a crosslinking agent and a crosslinking assistant based on 100 parts by mass of the rubber component as previously mentioned. When the adhesive having such a composition is used as the adhesive 24, the adhesion force can be improved and the workability can be made good.

When the adhesive contains not less than 70% by mass of the halogenated butyl rubber and not less than 5% by mass of natural rubber and/or isoprene rubber as the rubber component, the adhesiveness is largely improved, while when not less than 10% by mass of chlorosulfonated polyethylene is included as the rubber component, the weather resistance, ozone resistance and heat resistance are improved.

It is preferable that in the adhesive is included not less than 5 parts by mass of an inorganic filler and/or carbon black as a filler based on 100 parts by mass of the rubber component for improving the tackiness and the adhesiveness. As the inorganic filler may be mentioned at least one selected from silica obtained by a wet method, aluminum hydroxide, aluminum oxide and magnesium oxide. As the substituted dithiocarbamate based vulcanization accelerator included in the adhesive, it is preferable to use zinc dibenzyl dithiocarbamate for improving the adhesiveness.

When the repair member 26 for the inner face portion is attached to the repairing site J through the press member 25, it is preferable to heat the repair member 26 for the inner face portion and the adhesive 24 by the press member 25 to a temperature of thermally crosslinking the adhesive 24. In this case, the adhesiveness of the repair member 26 for the inner face portion to the repairing site J is further improved by the thermal crosslinking of the adhesive 24.

When the pneumatic tire 11 to be repaired is a retread tire (base tire), the thermal crosslinking of the adhesive 24 may be caused in the retreading operation of the retread tire or by heat generated by vulcanizing an uncured tread with a vulcanization apparatus. In this case, the thermal crosslinking of the adhesive 24 can be conducted along the way of vulcanization, so that the equipment and operation for the thermal crosslinking are unnecessary.

Moreover, when the resin layer 28 is disposed at the side of the attaching face of the repair member 26 for the inner face portion as mentioned above, the repair member 26 for the inner face portion is pushed while heating by the press member 25 such as an iron or the like, whereby the resin layer 28 may be solvent-welded and attached to the repairing site J to repair the repairing site J. In this case, the adhesive 24 may be used as a temporary joint of the repair member 26 for the inner face portion to the repairing site J.

When the repair member 26 for the inner face portion is attached to the repairing site J through solvent welding as mentioned above, it is preferable to heat the resin layer 28 in the repair member 26 for the inner face portion from its melting point up to a temperature of the melting point plus 20°C. When the heating temperature is lower than the melting point, the resin layer 28 is not sufficiently softened and may not surely be solvent-welded to the repairing site J, while when it exceeds the temperature of melting point plus 20°C, the resin layer is excessively softened and easily fluidized to be largely remote from the initial form to thereby fall in the repairing.

### <Embodiment 3>

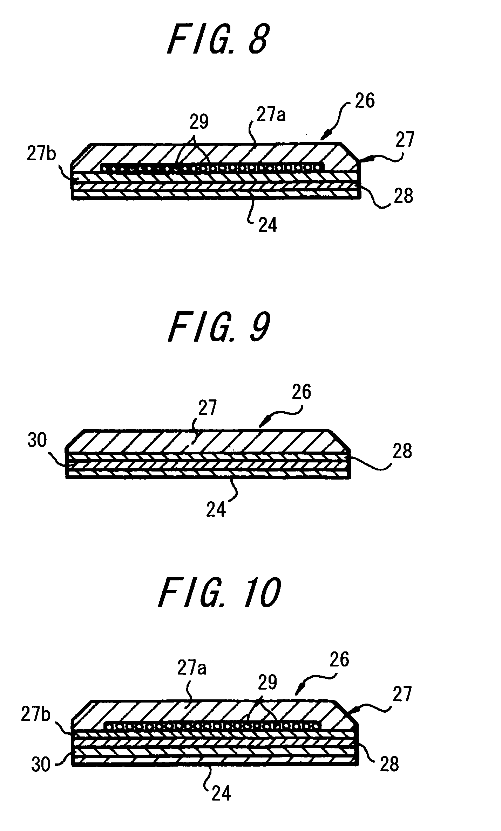

FIG. 8 is a view illustrating Embodiment 3 of the invention. In this embodiment, the rubber layer 27 as a part of the repair member 26 for the inner face portion is constructed with two rubber layers of first rubber layer 27a and second rubber layer 27b, while at least one layer, one layer in the illustrated embodiment of plural reinforcing cords 29 of organic fiber or steel arranged in parallel to each other is disposed between the first rubber layer 27a and the second rubber layer 27b, whereby the reinforcing cords 29 are embedded in the rubber layer 27 in the form of a layer. Moreover, numeral 28 is a resin layer, and numeral 24 is an adhesive. Thus, if the carcass cords or belt cords are injured in the pneumatic tire 11, such an injured portion can be easily reinforced by the reinforcing cords 29. Moreover, the other construction and functions are the same as in Embodiment 2.

### <Embodiment 4>

FIG. 9 is a view illustrating Embodiment 4 of the invention. In this embodiment, when the inner face (innerliner 17) of the pneumatic tire 11 is constituted with a vulcanized rubber having a high air impermeability such as butyl rubber, an adhesion rubber layer 30 made of a rubber having a good adhesiveness to the vulcanized rubber such as natural rubber is further bond-laminated at an attaching face side of the rubber layer 27 and resin layer 28, while an adhesive 24 such as an adhesive having the same composition as in the afore-mentioned adhesive or Chemlok 234B (made by Lord Far-East) is adhered to an attaching face side of the adhesion rubber layer 30. Even when the inner face of the pneumatic tire 11 is constituted with the vulcanized rubber having a high air impermeability and the resin layer 28 is disposed at the attaching face side from the rubber layer 27 in the repair member 26 for the inner face portion, the attaching strength of the repair member 26 for the inner face portion to the repairing site J can be improved. The other construction and functions are the same as in Embodiment 2.

### <Embodiment 5>

FIG. 10 is a view illustrating Embodiment 5 of the invention. In this embodiment, when the inner face (innerliner 17) of the pneumatic tire 11 is constituted with the vulcanized rubber having a high air impermeability, an adhesion rubber layer 30 made of a rubber having a good adhesiveness to the vulcanized rubber such as natural rubber is further bond-laminated at an attaching face side of the rubber layer 27 constituted with the first and second rubber layers 27a, 27b and embedded in its inside with the reinforcing cords 29 and the resin layer 28, while the same adhesive 24 as the aforementioned adhesive is adhered to the attaching face side of the adhesion rubber layer 30. Even when the inner face of the pneumatic tire 11 is constituted with the vulcanized rubber having a high air impermeability and the resin layer 28 is disposed at the attaching face side from the rubber layer 27 in the repair member 26 for the inner face portion, the attaching strength of the repair member 26 for the inner face portion to the repairing site J can be improved. The other construction and functions are the same as in Embodiment 3.

### INDUSTRIAL APPLICABILITY

The invention can be applied to an industrial filed of repairing the innerliner disposed in the inner face portion of the pneumatic tire. Also, the invention can be applied to an industrial field on repair members repairing the inner face portion of the pneumatic tire.

## Claims

1. A method for repairing an inner face portion of a pneumatic tire, **characterized in that** a thin-film repair member made from a resin having a high air impermeability is attached to a repairing side in the inner face portion of the pneumatic tire having an innerliner with an adhesive to repair the repairing site,

2. A method for repairing an inner face portion of a pneumatic tire, **characterized in that** a thin-film repair member made from a thermoplastic resin having a high air impermeability is attached to a repairing site in the inner face portion of the pneumatic tire having an innerliner through solvent welding to repair the repairing site.

3. A method for repairing an inner face portion of a pneumatic tire according to claim 1 or 2, wherein the repairing site is cleaned to expose a clean face prior to the attachment of the thin-film repair member to the repairing site.

4. A method for repairing an inner face portion of a pneumatic tire according to claim 1 or 2, wherein an adhesive is adhered to an attaching face side of the thin-film repair member prior to the attachment thereof.

5. A method for repairing an inner face portion of a pneumatic tire according to claim 2, wherein at least inner face side of the innerliner is made from a thermoplastic resin having a high air impermeability.

6. A method for repairing an inner face portion of a pneumatic tire according to claim 2, wherein the thin-film repair member is attached to the repairing site by heating the repair member from its melting point up to a temperature of the melting point plus 20°C.

7. A method for repairing an inner face portion of a pneumatic tire according to claim 2, wherein the thin-film repair member is attached through solvent welding by heat generated in a retreading operation when the pneumatic tire is a retread tire.

8. A method for repairing an inner face portion of a pneumatic tire according to claim 1, wherein the adhesive comprises a rubber component containing not less than 50% by mass of a halogenated butyl rubber and 2-50 parts by mass of a filler, not less than 0.1 part by mass of thiuram based and/or a substituted dithiocarbamate based vulcanization accelerator and not less than 0.1 part by mass of at least one of poly-p-dinitrosobenzene and 1,4-phenylene dimaleimide as a crosslinking agent and a crosslinking assistant based on 100 parts by mass of the rubber component.

9. A method for repairing an inner face portion of a pneumatic tire according to claim 1, wherein the thin-film repair member is attached to the repairing site and thereafter pushed onto the pneumatic tire.

10. A method for repairing an inner face portion of a pneumatic tire according to claim 8, wherein the thin-film repair member is heated up to a temperature of thermally crosslinking the adhesive.

11. A repair member for an inner face portion of a pneumatic tire, **characterized in that** the repair member is constructed by bond-laminating a rubber layer made of a vulcanized rubber with a resin layer made from a resin having a high air impermeability and attached to a repairing site in the inner face portion of the pneumatic tire to repair the repairing site.

12. A repair member for an inner face portion of a pneumatic tire according to claim 11, wherein plural reinforcing cords arranged in parallel to each other are embedded in the rubber layer in the form of a layer.

13. A repair member for an inner face portion of a pneumatic tire according to claim 11, wherein when an inner face of the pneumatic tire is constituted with a thermoplastic resin having a high air impermeability, the resin layer is made from a thermoplastic resin and disposed at an attaching face side to the repairing site.

14. A repair member for an inner face portion of a pneumatic tire according to claim 11, wherein when an inner face of the pneumatic tire is constituted with a vulcanized rubber having a high air impermeability, an adhesion rubber layer made of a rubber having a good adhesiveness to the vulcanized rubber is further bond-laminated onto an attaching face side of the resin layer.

15. A repair member for an inner face portion of a pneumatic tire according to claim 11, wherein the resin layer has an air permeation constant of not more than 1.5x10⁻⁹ cm³ · cm/cm² · sec · kPa.

16. A repair member for an inner face portion of a pneumatic tire according to claim 11, wherein an adhesive is adhered to an attaching face to the repairing site.

17. A repair member for an inner face portion of a pneumatic tire according to claim 16, wherein the adhesive comprises a rubber component containing not less than 50% by mass of a halogenated butyl rubber and 2-50 parts by mass of a filler, not less than 0.1 part by mass of thiuram based and/or a substituted dithiocarbamate based vulcanization accelerator and not less than 0.1 part by mass of at least one of poly-p-dinitrosobenzene and 1,4-phenylene dimaleimide as a crosslinking agent and a crosslinking assistant based on 100 parts by mass of the rubber component.

18. A repair member for an inner face portion of a pneumatic tire according to claim 17, wherein the adhesive is heated up to a temperature of causing thermal crosslinking reaction after being attached to the repairing site.
